# EUROPEAN PATENT SPECIFICATION

(11) **EP 1 217 789 B1**
(45) Date of publication and mention of the grant of the patent: **30.05.2012**
(21) Application number: 01950017.2
(22) Date of filing: 17.07.2001
(51) Int. Cl.: H04L 12/437

(54) **SELF-RELIEF METHOD AND RE-ESTABISHING METHOD FOR TRAFFIC**
VERFAHREN ZUR AUTOREGENERATION UND WIEDERHERSTELLUNG VON VERKEHR
PROCEDE DE REPARATION AUTOMATIQUE ET PROCEDE DE RETABLISSEMENT DU TRAFIC DE DONNEES

(30) Priority: 17.07.2000 JP 2000216272
(43) Date of publication of application: 26.06.2002
(73) Proprietor: Kabushiki Kaisha Toshiba, Tokyo 105-8001 (JP)
(72) Inventor: SUZUKI, Masatoshi, Yamato-shi, Kanagawa 242-0007 (JP)
(74) Representative: Brookes Batchellor LLP
(86) International application number: PCT/JP2001/006179
(87) International publication number: WO 2002/007390

(56) References cited:
- EP-A- 0 969 615
- EP-A1- 0 887 962
- JP-A- 8 214 020
- JP-A- 9 098 181
- JP-A- 2001 024 679
- JP-A- 2001 197 011
- "Interworking of SDH network protection architectures; G.842 (04/97)" ITU-T STANDARD IN FORCE (I), INTERNATIONAL TELECOMMUNICATION UNION, GENEVA, CH, no. G.842 (04/97), 1 April 1997 (1997-04-01), XP017401082
- KAM LAM (RAPPORTEUR) LUCENT TECHNOLOGIES: "DRAFT NEW RECOMMENDATION G.774-10 OEB_AMP#8220;SYNCHRONOUS DIGITAL HIERARCHY (SDH) MULTIPLEX SECTION (MS) SHARED PROTECTION RING MANAGEMENT FOR THE NETWORK ELEMENT VIEWOEB_AMP#8221;; C 15" ITU-T DRAFT STUDY PERIOD 2001-2004, INTERNATIONAL TELECOMMUNICATION UNION, GENEVA ; CH, vol. STUDY GROUP 15, 1 October 2000 (2000-10-01), pages 1-43, XP017412958
- SHI J J ET AL: "Analysis and design of survivable telecommunications networks" IEE PROCEEDINGS : COMMUNICATIONS, INSTITUTION OF ELECTRICAL ENGINEERS, GB, vol. 144, no. 5, 14 October 1997 (1997-10-14), pages 322-330, XP006008480 ISSN: 1350-2425

## Description

### Technical Field

This invention relates to a communication traffic protection architecture in an information communication network. More particularly, this invention relates to a method of self-healing service traffic transmitted via a dual-homing path and a method of reestablishing part-time traffic via a dual-homing path in a network provided with a protection line.

### Background Art

In many systems applied to the trunk of an information communication network, a plurality of ring nodes are connected in a ring via a transmission line. Most of the systems of this type are provided with the function of salvaging communication traffic automatically when a failure occurs, that is, a self-healing function.

Traffic is transmitted via a communication path set on the transmission line. When a failure occurs, the path on the service line is detoured to the protection line by the self-healing function. This enables service traffic to be salvaged.

Since service traffic is transmitted via the service line when there is no failure, the protection line is unused. For this reason, traffic different from the service traffic can be transmitted through the protection line. This type of traffic includes part-time traffic. Part-time traffic is the traffic corresponding to the traffic called extra traffic in the ITU-T (Telecommunication Standardization Sector of ITU) recommendations distributed by the ITU (International Telecommunication Union).

When a failure occurs, the part-time traffic is removed from the protection line and the service traffic is detoured to the protection line instead. This state is called restoration. When a vacant path has appeared on the protection line in the state where the service traffic has been restored, the part-time traffic can be connected only to the vacant path. Such a process is called reestablishing part-time traffic.

One of the systems with the above-described function is a network complying with the SDH (Synchronous Digital Hierarchy) standard. The self-healing function in the SDH standard is called APS (Automatic Protection Switching).

There is a detailed description of APS in ITU-T recommendation G. 841. In the recommendation, a service traffic self-healing method and a part-time traffic reestablishing method have been described. Also, in the recommendation, a method called "transoceanic application" has been written. This method is capable of minimizing a delay in transmission particularly when the distance between ring nodes is long.

There are two type of paths: one type, which connects two ring nodes in a one-to-one correspondence, is a so-called point-to-point path; and the other type, which connects a plurality of ring nodes in a one-to-many correspondence, is a point-to-multipoint path, such as a multi-drop path where a path starts from a node and is terminated at a plurality of nodes. A path of the latter type is called a dual-homing path in this specification.

The reader is referred to EP 0969615 and "Interworking of SDH network protection architectures; G. 842(04/97)" ITU - T Standard in Force. International Telecommunication Union, Geneva, CH, no. G.842 (04/97), 1 April 1997 (1997-04-01). XP017401082.

### Disclosure of Invention

The object of the present invention is to provide a method of self-healing traffic transmitted via a dual-homing path and a method of re-establishing the same traffic to prevent the traffic from being misconnected.

According to a first aspect of the invention, there is provided a method applied to a ring network system comprising nodes connected in a ring shape via the service line and a protection line, the method as defined in claim 1.

With such means, when a failure occurs, the dual-homing path is detoured to the protection line in, for example, the opposite route to that of the fault segment. This enables the service traffic to be salvaged via the detoured dual-homing path. More preferably, setting a detour circuit with no loopback enables the transmission delay time to be minimized.

By reestablishing part-time traffic when a vacant transmission resource appears, as described above, it is possible to prevent the traffic from being connected erroneously in reestablishing the part-time traffic.

It is particularly desirable to reestablish the part-time traffic only when it holds in both directions.

### Brief Description of Drawings

FIG. 1 shows a system configuration of an information communication system according to an embodiment of the present invention;
FIG. 2 is a block diagram showing the configuration of the main parts of ring node A to ring node F according to the embodiment;
FIG. 3 shows a state where the paths are set in the system of FIG. 1;
FIG. 4 is a diagram to help explain the rules for dual-homing paths;
FIG. 5 is a diagram to help explain the rules for dual-homing paths;
FIG. 6 is a diagram to help explain the rules for dual-homing paths;
FIG. 7 shows a method of self-healing service traffic in case 1 in a first embodiment of the present invention;
FIG. 8 shows a method of self-healing service traffic in case 2 in the first embodiment;
FIG. 9 shows a method of self-healing service traffic in case 3 in the first embodiment;
FIG. 10 shows a method of self-healing service traffic in case 4 in the first embodiment;
FIG. 11 shows a method of self-healing service traffic in case 5 in the first embodiment of the present invention;
FIG. 12 shows a method of self-healing service traffic in case 6 in the first embodiment;
FIG. 13 shows a method of self-healing service traffic in case 6 in the first embodiment;
FIG. 14 shows a method of self-healing service traffic in case 7 in the first embodiment;
FIG. 15 shows a method of self-healing service traffic in case 8 in the first embodiment;
FIG. 16 shows another state where the paths are set in the system of FIG. 1;
FIG. 17 shows a method of self-healing service traffic in case 9 in the first embodiment;
FIG. 18 shows a method of self-healing service traffic in case 10 in the first embodiment;
FIG. 19 shows a method of self-healing service traffic in case 11 in the first embodiment;
FIG. 20 shows still another state where the paths are set in the system of FIG. 1;
FIG. 21 shows a reestablishing method in case 12 in a second embodiment of the present invention;
FIG. 22 shows a reestablishing method in case 13 in the second embodiment;
FIG. 23 shows a reestablishing method in case 14 in the second embodiment;
FIG. 24 shows a reestablishing method in case 15 in the second embodiment;
FIG. 25 shows a reestablishing method in case 16 in the second embodiment; and
FIG. 26 shows a reestablishing method in case 17 in the second embodiment.

Best Mode for Carrying Out of the Invention Hereinafter, referring to the accompanying drawings, embodiments of the present invention will be explained in detail. In the embodiments, a system complying with the SDH will be described.

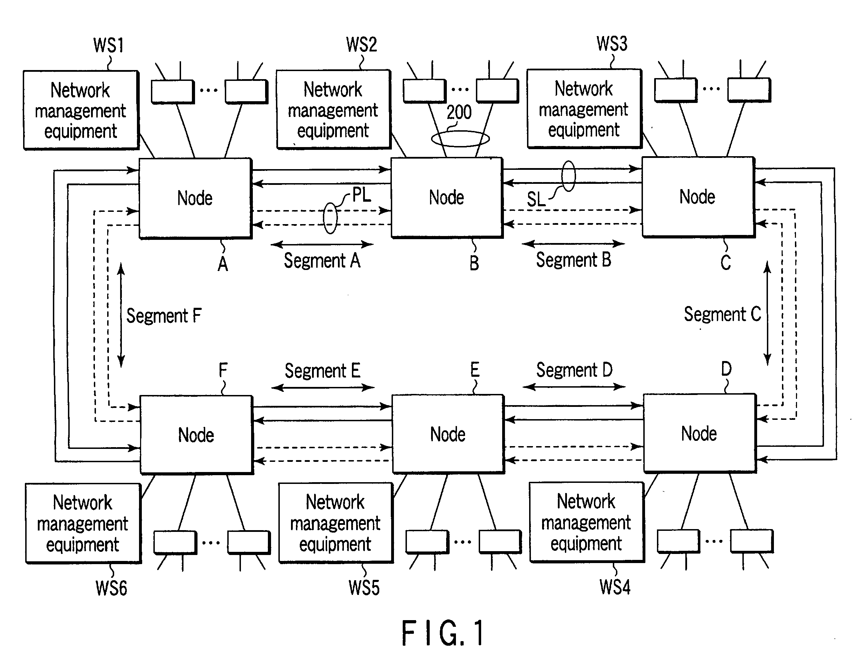

FIG. 1 shows the configuration of a ring network system according to an embodiment of the present invention. This system includes a plurality of ring nodes (hereinafter, referred to as nodes) A to F. The individual ring nodes are connected in a ring via a service line SL and a protection line PL. Each of the transmission lines SL and PL has a clockwise (CW) transmission route and a counterclockwise (CCW) transmission route, that is, bidirectional transmission routes. The system configured as shown in FIG. 1 is known as MS SPRing (Multiplex Section Shared Protection Ring).

In the service line SL and protection line PL, a plurality of paths are time-division multiplexed. As the multiplexing levels, for example, STM-64 (Synchronous Transfer Module Level-64) is used.

In FIG. 1, each of node A to node F drops an arbitrary slot from the time slot time-division multiplexed with the STM-64 signal. The dropped slot is sent as a low-order group signal to a low-order group apparatus (not marked with a reference numeral) via a low-speed line 200.

Individual nodes A to F multiplex the low-order group signals transmitted via the low-speed lines 200 from the low-order group apparatuses with arbitrary time slots of the STM-64 signal. In this way, a communication path with a specific transmission capacity is created in the network. Each path has a transmission capacity of STM-1, STM-4, STM-16, or STM-64.

The low-order group apparatuses include switching systems or terminal apparatuses. Network management equipments WS1 to WS6 are also connected to nodes A to F, respectively. The network management equipments are apparatuses which provide supervisory control of the network.

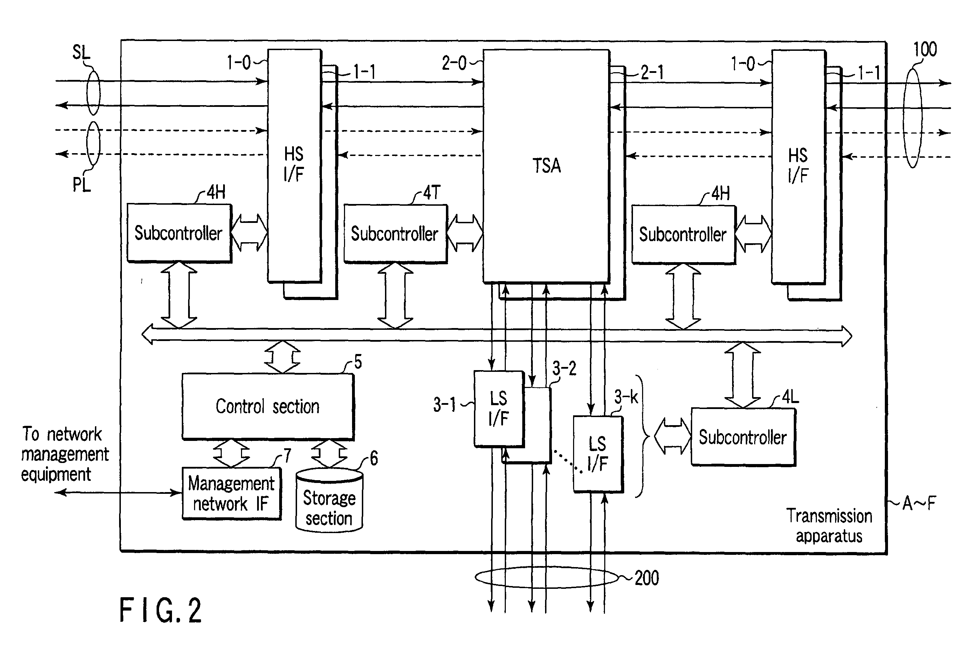

FIG. 2 shows the configuration of each of nodes A to F according to this embodiment. Each of nodes A to F includes a service high-speed interface section (HS I/F) 1-0 connected to the service line SL and a protection high-speed interface section 1-1 connected to the protection line PL.

The STM-64 signal is introduced into the inside of the apparatus via the service high-speed interface section 1-0 and protection high-speed interface section 1-1. The STM-64 signal is supplied to a Time Slot Assignment (TSA) section 2-0. The time slot assignment section 2-0 drops an arbitrary one of the time slots time-division-multiplexed with the STM-64 signal. The slot is given to low-speed interface sections (LS I/F) 3-1 to 3-k. The low-speed interface sections (LS I/F) 3-1 to 3-k output the dropped slots as low-order group signals via the low-speed lines 200.

Conversely, the low-order group signal having arrived inside of the apparatus from the low-speed line 200 is supplied to the time slot assignment section 2-0. The time slot assignment section 2-0 multiplexes the low-order group signal with an arbitrary time slot in the STM-64 frame. The STM-64 signal including the multiplexed low-order group signal is sent toward an adjacent node via the high-speed line 100.

The time slot assignment section 2-0 and time slot assignment section 2-1 make a pair, thereby forming a double configuration. In a normal operation (or when there is no failure), the time slot assignment section 2-0 operates as a service system. If a failure has occurred in the time slot assignment section 2-0, switching is done in the apparatus, with the result that the time slot assignment section 2-1 is used as a protection system. The operation of the time slot assignment section 2-1 is the same as that of the time slot assignment section 2-0.

The high-speed interface sections 1-0, 1-1, time slot assignment sections 2-0, 2-1, and low-speed interface sections 3-1 to 3-k are each connected to a main control section 5 via subcontrollers 4H, 4T, 4L. The subcontrollers 4H, 4T, 4L supplements various control functions of the main control section 5. The subcontrollers 4H, 4T, 4L and main control section 5 perform various control, including protection switching control, in a hierarchical manner.

The main control section 5 is connected to a storage section 6 and a management network interface (I/F) 7. The storage section 6 stores various control programs. The management network interface 7 is connected to the network management equipment.

The control section 5 controls the time slot assignment sections 2-0, 2-1 on the basis of the information supplied from the interface sections (I/F) 1-0, 1-1, 3-1 to 3-k. The programs and data necessary at that time are stored in the storage section 6. The data includes a ring map and fabric data.

### (First Embodiment)

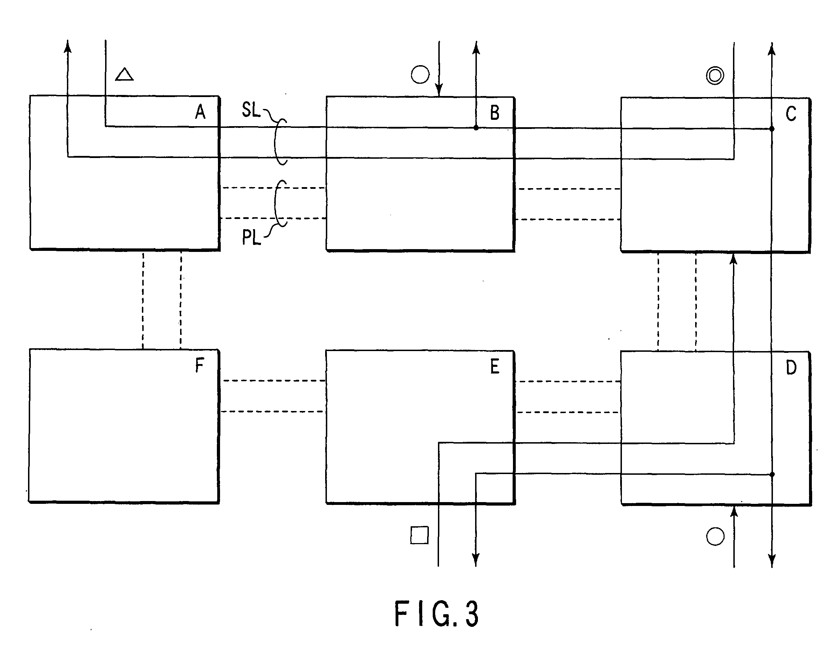

FIG. 3 shows an example of setting a dual-homing path acting as a point-to-multipoint path in the system of FIG. 1. In the figure, reference letters A to F correspond to the nodes in FIG. 1. The solid lines correspond to the service lines in FIG. 1. The broken lines correspond to the protection lines PL in FIG. 1. An arrow, which represents the path set on a line, corresponds to one of the time slots. The direction of an arrow corresponds to the direction of transmission (CW, CCW).

For example, as shown in node B, the arrow going out of the node means that the path corresponding to the arrow is dropped to the low-order group side at this node. Conversely, as shown in node A, the arrow entering the node means that the path corresponding to the arrow is added to the transmission line by the low-order group side.

In FIG. 3, the path added to node A is branched at each of the nodes B, C, D, and E and dropped in a broadcasting manner. Node A drops a path comes from the opposite direction to the direction of the added path. Node A drops the added path and the path in the opposite direction. By way of these paths, bidirectional communication is realized. In the embodiment, for the sake of convenience, a path which is branched is called an outgoing path and a path which returns to the starting point of the outgoing path is called a returning path. A dual-homing path is a concept for generically meaning an outgoing path and a returning path.

In ITU-T recommendation G. 841, a method of self-healing service traffic transmitted via a dual-homing path has not been described concretely. Furthermore, in the recommendation, a method of reestablishing part-time traffic transmitted via a dual-homing path has not been described concretely.

Therefore, if a failure has occurred in a state where a dual-homing path exists in the network, the self-healing function might not operate properly. If the self-healing function does not operate properly, the communication might stop or, in the worst case, traffic might be misconnected.

In the embodiment, a method of self-healing service traffic transmitted via a dual-homing path will be disclosed concretely. By carrying out the protection switching process as a result of the occurrence of a failure by the method explained in the embodiment, the misconnection of service traffic can be prevented.

In the embodiment, the following two rules for dual-homing paths are determined:
Rule 1: A returning path is not allowed to be added at a node where an outgoing path has not been dropped.

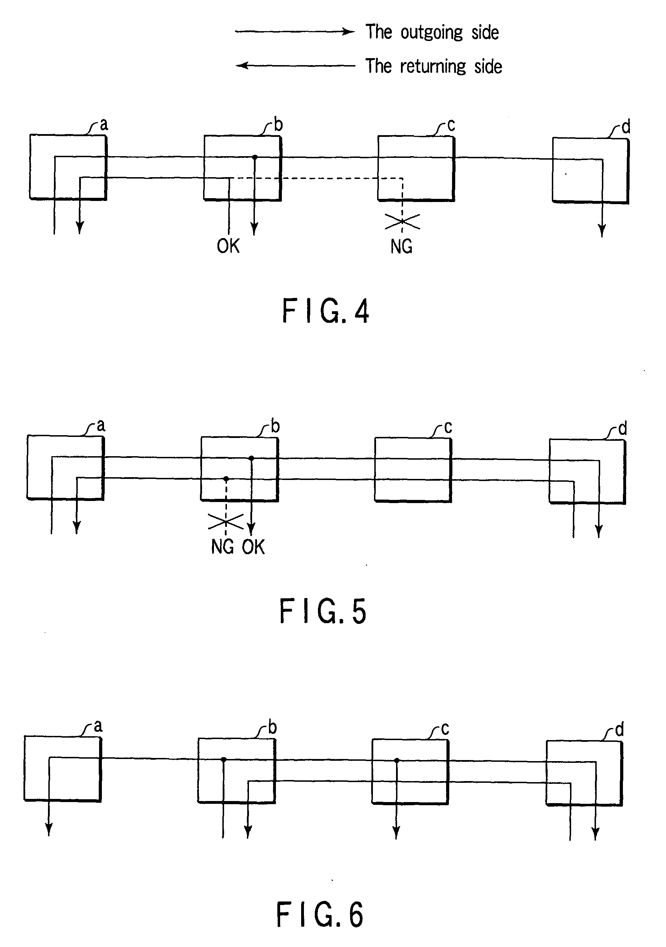

As shown in FIG. 4, an outgoing path added at node a is dropped at node b and node d. Therefore, a returning path is allowed to be added at node b and node d (OK). However, the returning path is not allowed to be added at node c (NG).

Rule 2: A returning path is not allowed to be dropped at a plurality of nodes.

As shown in FIG. 5, a path in the CW direction is dropped at node b and node d. Therefore, if this path is an outgoing path, a path in the CCW direction is a returning path. The returning path has reached node a, so that the same path is not allowed to be dropped at, for example, node b.

Setting these rules makes it simpler to operate the network. Without rules, the process of determining the priority of paths would become complicated and therefore the operation of the network would become more complex.

FIG. 6 shows an example of setting a dual-homing path which fulfills the above rules. The point that requires attention is that the outgoing path added at node b is sent in both directions (that is, in the CW direction and the CCW direction). Since such path setting is not against the above rules, it is allowed.

According to the mode of adding a path and the mode of dropping a path, nodes are classified into a plurality of types. Explanation will be given by reference to FIG. 3 again.

In FIG. 3, at node A, the outgoing path is added and, at the same time, the returning path is dropped. This type of node is called a head node. In FIG. 3, the head node is a node which serves as the starting point of the outgoing path and, at the same time, as the end of the returning path.

Node B and node D not only drop the outgoing path but also cause the returning path to pass through. This type of node is called a drop & continue node. In FIG. 3, the drop & continue node corresponds to a branch node for the outgoing path and an intermediate node (that is, a node through which the path just passes) for the returning path.

Node C not only drops the outgoing path but also adds the returning path. This type of node is called a drop & continue with add node. In FIG. 3, the drop & continue with add node corresponds to a branch node for the outgoing path and a starting point node for the returning path. This type of node may be generally called a branch and insert node, because it branches and inserts a path.

Node E terminates the outgoing path. This type of node is a tail node. In the tail node, the returning path might be inserted. In FIG. 3, the tail node is an end node for the outgoing path.

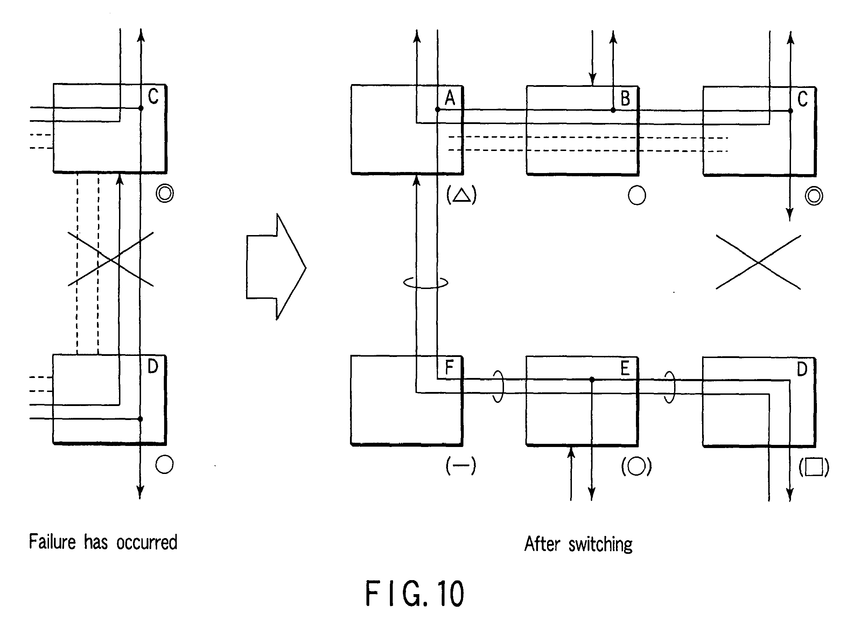

In addition to these, there is a node that causes the going and returning paths to pass through, as node F does in FIG. 10. This type of node is called a pass-through node. In FIG. 3, the pass-through node is an intermediate node for both of the outgoing path and the returning path.

In the description below, to avoid complexity, a head node is represented as a (Δ) node, a drop & continue node as a (○) node, a drop & continue with add node as a (⊚) node, a tail node as a (□) node, and a pass-through node as a (_) node. In the drawings, too, these symbols are used.

It should be noted that the type of node is determined for each path. Specifically, the type of node is expressed as follows: "This node is a (○) node for a first path and a (Δ) node for a second path." That is, the type of node shows the situation of a node in each path.

Next, a method of self-healing service traffic in the embodiment will be explained in various cases. A state where there is no failure in the system as shown in FIG. 3 is called a normal state. When a failure occurs in this state, the system goes into a failure state. When a failure occurs, protection switching is done according to the mode of the failure and the place where the failure has occurred, with the result that the route of the path changes. In the explain below, an example of applying protection switching control by the transoceanic method written in ITU-T recommendation G. 841 to a dual-homing path will be explained.

### (Case 1)

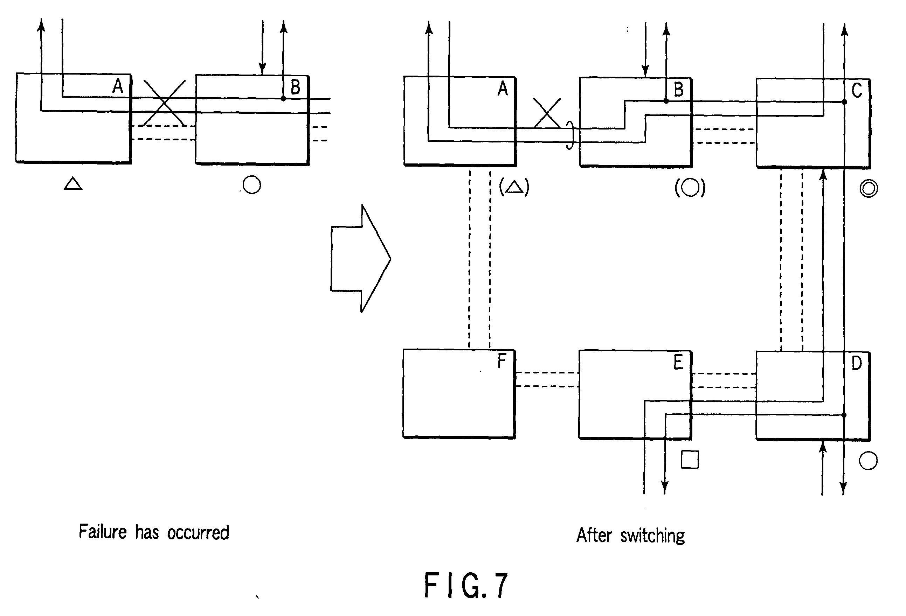

FIG. 7 shows a method of self-healing service traffic in case 1. FIG. 7 shows a state where a failure has occurred in the service line SL between node A and node B in FIG. 3. In this case, span switching is effected, thereby detouring the dual-homing path set on the service line SL between node A and node B to the protection line PL in the same segment. This makes it possible to salvage the service traffic, while maintaining the bidirectional communication.

### (Case 2)

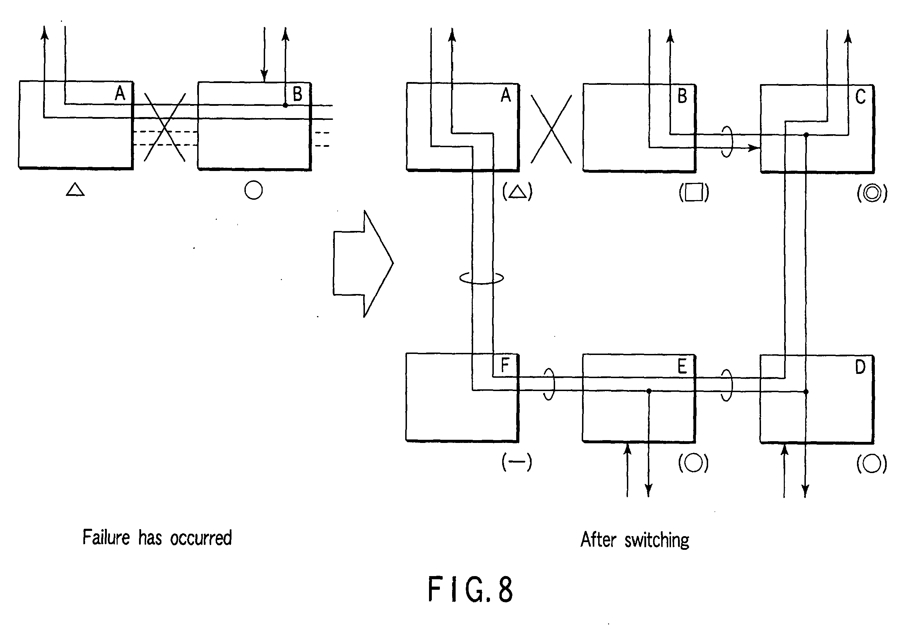

FIG. 8 shows a method of self-healing service traffic in case 2. FIG. 8 shows a state where a failure has occurred in the service line SL and protection line PL between node A and node B in FIG. 3. A state where a failure has occurred in the service line SL and protection line PL in the same segment is called a ring failure.

In this case, protection switching was effected by a method called a ring switching method in the prior art. More preferably, transoceanic ring switching was done. However, it was impossible to salvage the service traffic flowing through the dual-homing path, depending on the switching action taking only an ordinary point-to-point path into account. To overcome this problem, the switching explained below is effected in the embodiment.

Node A separates the outgoing path from the service line SL in the CW direction and switches it to the protection line PL in the CCW direction. Node F takes in the path from the protection line PL and causes it to pass through to node E. Node E takes in the path from the protection line PL, branches it therein and not only drops it but also causes it to pass through to node D. Node D takes in the path from the protection line PL, branches it therein and not only drops it but also causes it to pass through to node C. Node C takes in the path from the protection line PL, branches it therein and not only drops it but also causes it to pass through to node B. Node B takes in the path from the protection line PL and drops it therein.

In this way, the outgoing path from node A is detoured from the route in the CW direction via the service line SL to the route in the CCW direction via the protection line PL. At this time, the route of the outgoing path dropped at a plurality of nodes in the normal state are not lost even in the fault state. Therefore, the service traffic transmitted via the outgoing path is salvaged from the failure.

On the other hand, at node D, node E, node F, and node A, the line from which the returning path from node C is taken in is switched from the service line SL to the protection line PL. This causes the route of the returning path to be detoured in the CW direction. Therefore, the service traffic transmitted via the returning path is also salvaged from the failure.

As described above, the service traffic transmitted in both directions via the dual-homing path is salvaged without being cut off due to the occurrence of a failure.

It should be noted that the types of some nodes change as a result of the switching of the line from which the path is taken in at each node. Specifically, before and after the occurrence of an failure, the types of nodes change as follows: node B changes from a (○) node to a (□) node, node E changes from a (□) node to a (○) node, node F changes from the state unrelated to the present dual-homing path to a (_) node.

The individual nodes exchange the necessary information for protection switching with each other via the K bytes defined in the SOH (Section Over Head) of an SDH frame. In FIG. 8, node A and node B sense the occurrence of a failure directly. Thus, these nodes function as switching nodes which send K bytes in opposite directions via the protection line PL on the remaining side. Node C, node D, node E and node F read K bytes transferred sequentially and interpret them to obtain information about the place where the failure has occurred and others.

As described above, each node acquires information about the place where a failure occurred, the way the failure took place, and others through K bytes. Then, referring to the information acquired from the K bytes, the ring map, and the fabric data, each node calculates a detour route of the path to salvage the service traffic. To realize the calculated route, each node determines its switching state. This process is carried out path by path. In this way, each node changes its node type independently to salvage the service traffic.

### (Case 3)

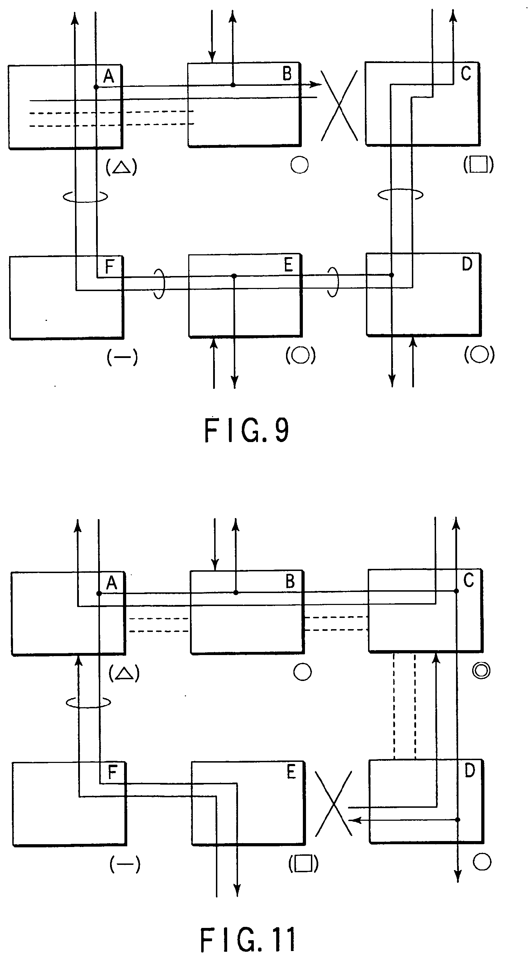

FIG. 9 shows a method of self-healing service traffic in case 3. FIG. 9 shows a state where a ring failure has occurred in the segment between node B and node C of FIG. 3.

Node A branches the outgoing path in two and sends one of them to the service line SL in the CW direction and the other to the protection line PL in the CCW direction. Node B takes in the outgoing path from the service line SL, branches it therein, and not only drops it but also causes it to pass through to the next node. The outgoing path caused to pass through at node B reaches the fault segment.

On the other hand, node F takes in the outgoing path from node A from the protection line PL and causes it to pass through to node E. Node E takes in this path from the protection line PL, branches it therein, and not only drops it but also causes it to pass through to node D. Node D takes in this path from the protection line PL, branches it therein, and not only drops it but also causes it to pass through to node C. Node C takes in this path from the protection line PL and drops it therein.

As described above, the outgoing path from node A is detoured to the route in the CW direction via the service line SL at node A and node B. Furthermore, the outgoing path is detoured to the route in the CCW direction via the protection line PL at node A, node F, node E, node D, and node C. Detouring the outgoing path this way salvages the service traffic transferred via the outgoing path from the failure.

On the other hand, the returning path from node C is detoured to the route in the CW direction. This is because the line from which the returning path is taken in is switched from the service line SL to the protection line PL at node D, node E, node F, and node A. Detouring the returning path this way also salvages the service traffic transmitted via the returning path from the failure.

As described above, in the case of FIG. 9, too, the service traffic transmitted in both directions via the dual-homing path is salvaged from the failure.

In the above case, node C changes from a (⊚) node to a (□) node, node E changes from a (□) node to a (○) node, and node F changes to a (_) node. Node A remains unchanged in the type before and after the occurrence of a failure. However, as a result of the switching, node A branches the outgoing path in two and detours one of them to the service line in the CW direction and the other to the protection line PL in the CCW direction. A node that sends the branched paths to both directions may be called a dual head node.

### (Case 4)

FIG. 10 shows a method of self-healing service traffic in case 4. FIG. 10 shows a state where a ring failure has occurred in the segment between node C and node D of FIG. 3.

As in case 3, node A branches the outgoing path in two and sends one of them to the service line SL in the CW direction and the other to the protection line PL in the CCW direction. Node B and node C take in this path from the service line SL, branch it therein, and not only drop it but also cause it to pass through to the next node. The outgoing path caused to pass through at node C reaches the fault segment.

On the other hand, node F takes in the outgoing path from node A from the protection line PL and causes it to pass through to node E. Node E takes in this path from the protection line PL, branches it therein, and not only drops it but also causes it to pass through to node D. Node D takes in this path from the protection line PL and drops it therein.

In this way, the outgoing path from node A is detoured to the route in the CW direction via the service line SL at node A to node C. Furthermore, the outgoing path is detoured to the route in the CCW direction via the protection line PL at node A, node F, node E, and node D. Detouring the outgoing path this way salvages the service traffic transmitted via the outgoing path from the failure. Since the service traffic transmitted via the returning path from node C is not affected by the failure, its route is not changed.

In the above case, node D changes from a (○) node to a (□) node, node E changes from a (□) node to a (○) node, and node F changes to a (_) node.

As in case 3, node A changes to a dual head node as a result of the switching of the path route.

### (Case 5)

FIG. 11 shows a method of self-healing service traffic in case 5. FIG. 11 shows a state where a ring failure has occurred in the segment between node D and node E of FIG. 3.

Node A branches the outgoing path in two and sends one of them to the service line SL in the CW direction and the other to the protection line PL in the CCW direction. Node B, node C, and node D take in this path from the service line SL, branch it therein, and not only drop it but also cause it to pass through sequentially to the next node. The outgoing path caused to pass through at node D reaches the fault segment.

On the other hand, node F takes in the outgoing path from node A from the protection line PL and causes it to pass through to node E. Node E takes in this path from the protection line PL and drops it therein.

In this way, the outgoing path from node A is detoured to the route in the CW direction via the service line SL at node A to node D. Furthermore, the outgoing path is detoured to the route in the CCW direction via the protection line PL at node A, node F, and node E. Detouring the outgoing path this way salvages the service traffic transmitted via the path from the failure.

In this case, node F is the only node whose type is changed. However, for example, at node E, the destination of the traffic and the place from which the traffic is taken in has been switched. That is, the type of node E should be considered to eventually remain unchanged. The same holds true for node A.

### (Case 6)

In the network, the number of places where a failure occurs is not limited to one. That is, a failure might occur in a plurality of segments. A state where a plurality of failures occur in a network is called multiple failure. Multiple failure occurring in two segments adjacent to a node is equivalent to the fact that the node is down.

Hereinafter, a case where multiple failure has occurred will be explained.

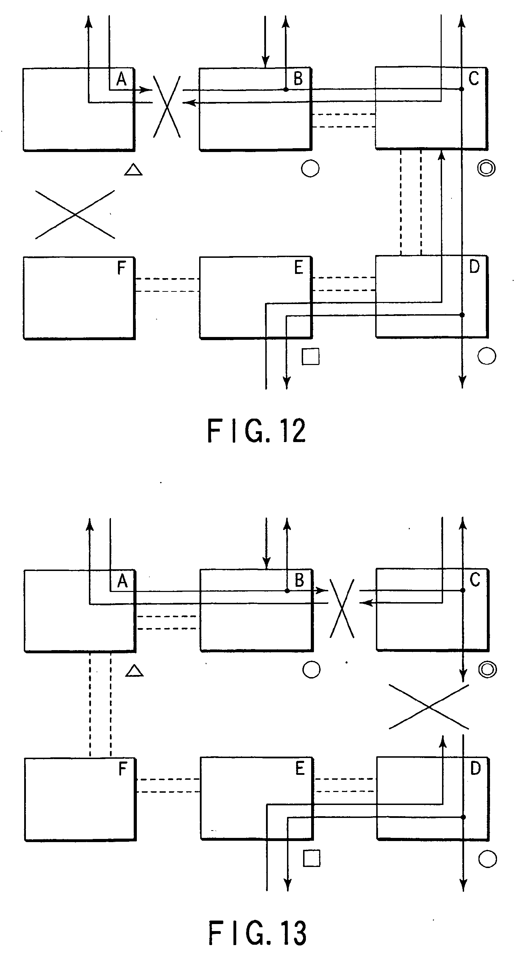

FIGS. 12 and 13 show a method of self-healing service traffic in case 6. FIG. 12 shows a state where a ring failure has occurred in the segment between node A and node B and in the segment between node A and node F in FIG. 3. Therefore, in FIG. 12, node A is isolated from the network.

FIG. 13 shows a state where a ring failure has occurred in the segment between node B and node C and in the segment between node C and node D in FIG. 3. Therefore, in FIG. 13, node C is isolated from the network.

In such a case, each node does not carry out the protection switching process by APS in the embodiment. In FIGS. 12 and 13, node A is the starting point of the outgoing traffic. Node C is the starting point of the returning traffic. Therefore, when node A or node C is isolated, it is impossible to form a path that realizes bidirectional transmission. In the embodiment, only when bidirectional information transmission can be reestablished, the process of detouring a dual-homing path by the transoceanic ring switching.

### (Case 7)

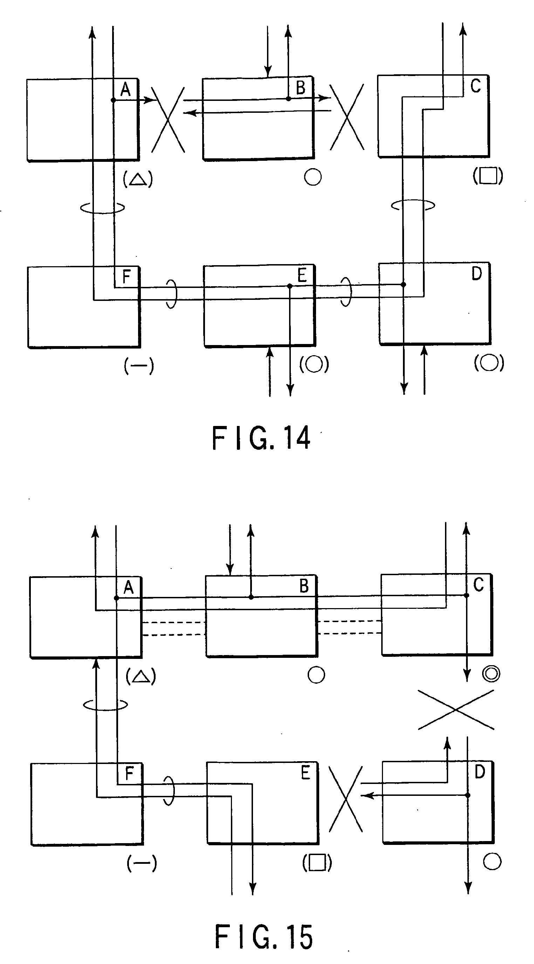

FIG. 14 shows a method of self-healing service traffic in case 7. FIG. 14 shows a state where a failure that isolates node B has occurred. Node B, which is a (○) node, adds neither the outgoing path nor the returning path. Therefore, switching at another node enables the service traffic flowing through the dual-homing path to be salvaged. Specifically, switching control is performed as described below.

Node A branches the outgoing path in two and sends one of them to the service line SL in the CW direction and the other to the protection line PL in the CCW direction. Node F takes in the outgoing path from the protection line PL and causes it to pass through to node E. Node E takes in this path from the protection line PL, branches it therein, and not only drops it but also causes it to pass through to node D. Node D takes in this path from the protection line PL, branches it therein, and not only drops it but also causes it to pass through to node C. Node C takes in this path from the protection line PL and drops it therein. In this way, the outgoing path from node A is detoured in the CCW direction.

On the other hand, node D, node E, node F, and node A switch the line from which the returning path is taken in from the service line SL to the protection line PL. As a result, the returning path from node C is detoured in the CW direction. Detouring the returning path this way salvages the service traffic flowing through the returning path.

In this case, node C changes from a (⊚) node to a (□) node, node E changes from a (□) node to a (○) node, and node F changes to a (_) node.

### (Case 8)

FIG. 15 shows a method of self-healing service traffic in case 8. FIG. 15 shows a state where a failure that isolates node D has occurred. As in case 7, switching at the remaining nodes (that is, the nodes excluding node D) enables the service traffic to be salvaged. Specifically, switching control is performed as described below.

Node A branches the outgoing path in two and sends one of them to the service line SL in the CW direction and the other to the protection line PL in the CCW direction. Node F takes in the outgoing path from the protection line PL and causes it to pass through to node E. Node E takes in this path from the protection line PL and drops it therein.

In this way, the outgoing path from node A is detoured in the CCW direction via the service line SL at node A to node C. At node A, node F, and node E, the outgoing path is detoured to the route in the CCW direction via the protection line PL. Detouring the outgoing path this way salvages the service traffic transmitted via the outgoing path from the failure. Because the service traffic transmitted via the returning path from node C is not affected by the failure, the route is not changed. In this case, node F changes to a (_) node.

If multiple failure has occurred, care should be taken about the order in which the failures are corrected. That is, depending on the order in which two or more failures are corrected, the state of the original traffic might not be reestablished after the recovery. To avoid this, protection switching might not be done intentionally. In the above explanation, this point has been taken into account.

### [Another example of path setting]

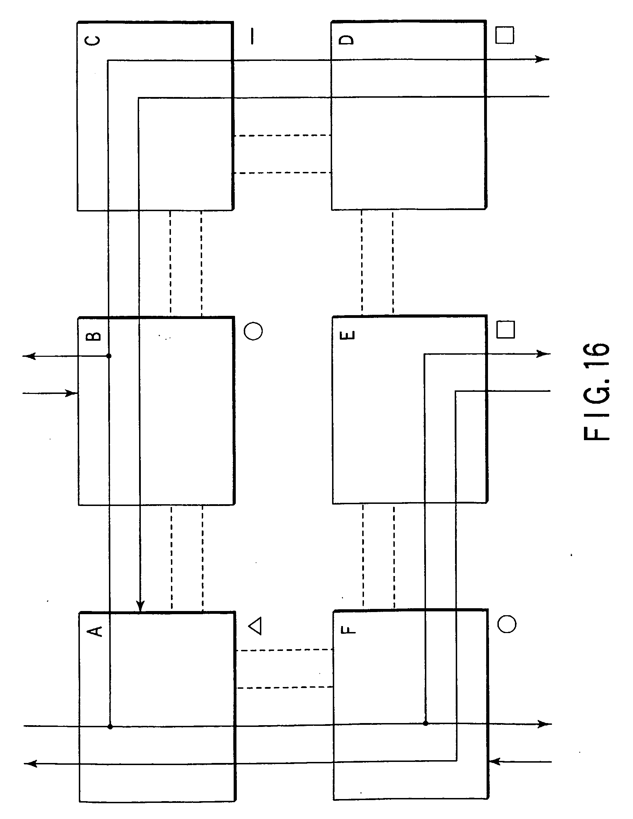

FIG. 16 shows another example of path setting which replaces FIG. 3. In FIG. 16, node A is a head node (Δ), but the route of a path to be set differs from that in FIG. 3. Specifically, the outgoing path added at node A is branched at node A and sent to the service line SL in the CW direction and to the service line SL in the CCW direction. Of these, the path in the CW direction is branched at node B and dropped there. Then, it is caused to pass through at node C and terminated at node D. The path in the CCW direction is branched at node F and dropped there. Then, it is terminated at node E. Furthermore, the returning path to node A is added at node E and node D. Of these, the path added at node E is terminated at node A.

In this embodiment, for the sake of convenience, the outgoing path in the CCW direction which pairs with the returning path is called a first outgoing path and the outgoing path in the CW direction is called a second outgoing path.

In the path setting state as shown in FIG. 16, node A is a head node (Δ). That is, node A serves as a starting point node for the first and second outgoing path and an end node for the returning path. Node B is a drop & continue node (○). That is, node B serves as an intermediate separation node for the second outgoing path. Node F is a drop & continue node (○). That is, node B serves as an intermediate separation node for the first outgoing path and an intermediate node for the returning path. Node C is a pass-through node (_). That is, node C serves as an intermediate node for the second outgoing path. Node D is a tail node (□). That is, node D serves as an end node for the second outgoing path. Node E is a tail node (□). That is, node E serves as an end node for the first outgoing path and a starting point node for the returning path.

### (Case 9)

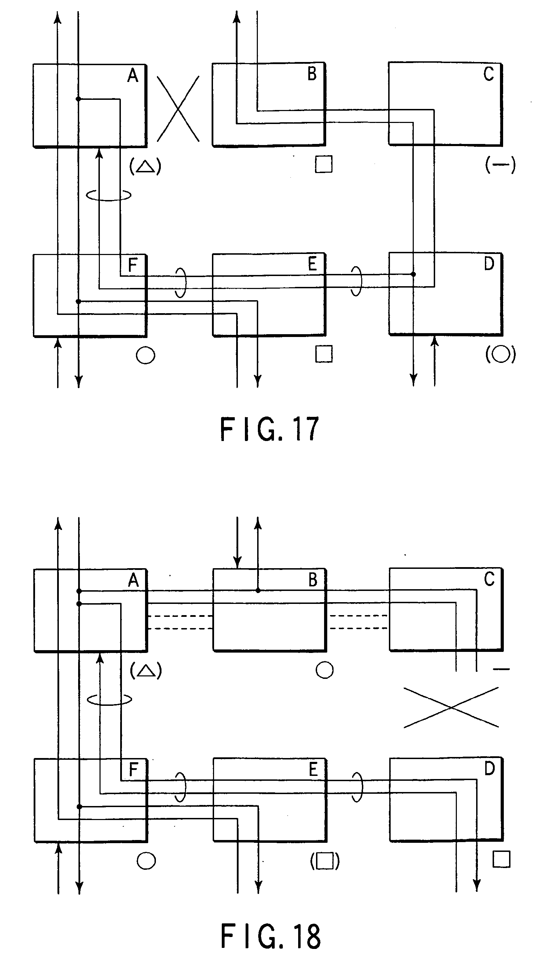

FIG. 17 shows a method of self-healing service traffic in case 9. FIG. 17 shows a state where a ring failure has occurred in the segment between node A and node B of FIG. 16.

Node A branches the outgoing path in two and sends one of them to the service line SL in the CCW direction and the other to the protection line PL in the CCW direction. The outgoing path on the service line SL is branched at node F and dropped there and then terminated at node E. The outgoing path on the protection line PL is caused to pass through at node F and node E and then is branched at node D and dropped there. Furthermore, it is caused to pass through at node C and terminated at node B.

The returning path added at node E goes through node E and is dropped at node A, taking the same route as that before the occurrence of the failure. At node B, the path in the CW direction via the protection line PL is added. This path is transmitted to node A via node C to node F. This path is not dropped at node A.

As a result of such path setting, node B changes to a (□) node and node D changes to a (○) node.

### (Case 10)

FIG. 18 shows a method of self-healing service traffic in case 10. FIG. 18 shows a state where a ring failure has occurred in the segment between node C and node D of FIG. 16.

Node A branches the outgoing path into three parts and sends one of them to the service line SL in the CCW direction, another to the protection line PL in the CCW direction, and the last one to the service line SL in the CW direction. Of these, the outgoing path on the service line SL in the CW direction is branched at node B and dropped there. Then, it goes through node C and reaches the fault segment.

The outgoing path on the service line SL in the CCW direction is branched at node F and dropped there and then is terminated at node E. The outgoing path on the protection line PL is caused to pass through at node F and node E and is terminated at node D. The returning path added at node E goes through node E and is dropped at node A, taking the same route as that before the occurrence of the failure. Furthermore, the path in the CW direction via the protection line PL is added at node D and is transmitted to node A via node E and node F. This path is not dropped at node A.

### (Case 11)

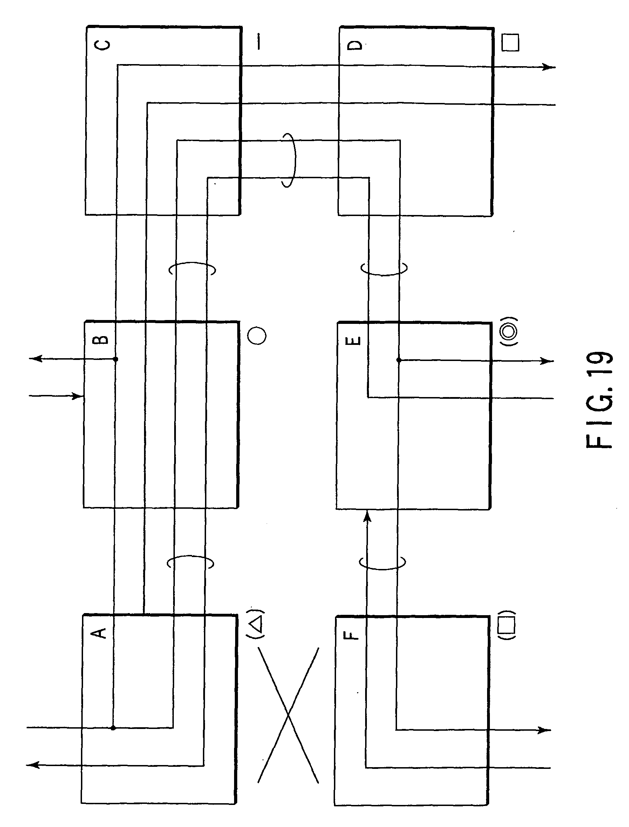

FIG. 19 shows a method of self-healing service traffic in case 11. FIG. 19 shows a state where a ring failure has occurred in the segment between node A and node F of FIG. 16.

Node A branches the outgoing path in two and sends one of them to the service line SL in the CW direction and the other to the protection line in the CW direction. Of these, the outgoing path in the service line SL is branched at node B and dropped there. Then, it goes through node C and is terminated at node D. The outgoing path on the protection line PL is caused to pass through at node B to node D. Then, it is branched at node E and dropped there and is terminated at node E.

On the other hand, the returning path added at node E is sent to the protection line PL in the CCW direction. It then goes through node D, node C, and node B in this order and is terminated at node A.

Furthermore, the path in the CW direction via the protection line PL is added at node F. Although this path is transmitted to node E, it is not dropped there. Moreover, the path in the CW direction via the service line SL is added at node D. This path goes through node C and node B and is transmitted to node A. This path is not dropped at node A.

As a result of such path setting, node E changes to a (⊚) node and node F changes to a (□) node.

In case 9, case 10, case 11, and the like, the detouring process is carried out, taking the following point into account. In these cases, traffic separating into parts in the CW and CCW directions (or in both directions) is added at a (Δ: head) node. In this case, the state of the original path is prevented from changing in the opposite direction to the fault segment (that is, in the direction in which the outgoing path added at the head node goes further away from the failure) in this embodiment.

In all the cases in this embodiment, the state of the path is prevented from changing before and after the failure in the more upstream segment than the fault segment (that is, in the segment extending from the fault segment to the head node).

As described above, in the embodiment, if a ring failure has occurred in the state where a dual-homing path exists in the network, the dual-homing path is detoured from the service line SL to the protection line PL. At that time, each node in the network changes its node type according to the place where the failure has occurred.

Therefore, it is possible to prevent the service traffic transmitted via the dual-homing path from being misconnected.

The present embodiment is characterized in that each node in the network changes its node type according to the place where the failure has occurred. This is because the transoceanic ring switching is effected in detouring the dual-homing path to the protection line PL.

### (Second Embodiment)

A second embodiment of the present invention will be explained. In the second embodiment, a method of reestablishing part-time traffic transmitted via a dual-homing path will be disclosed concretely. A reestablishing process after the restoration of service traffic is carried out by the method described in the second embodiment, which makes it possible to prevent part-time traffic from being misconnected.

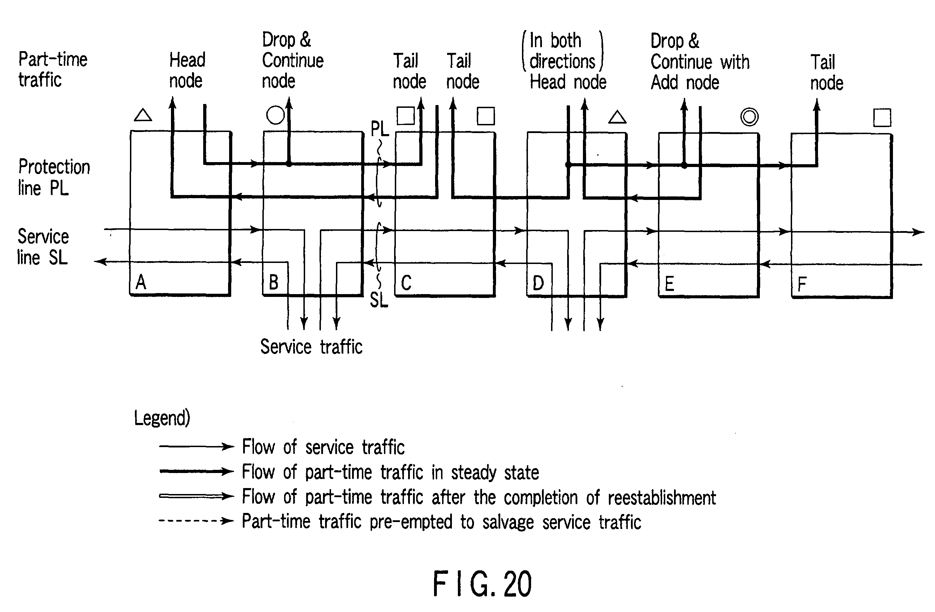

FIG. 20 shows another example of setting a dual-homing path in the system of FIG. 1. In the figure, reference letters (A) to (F) indicate nodes, which correspond to FIG. 1. In FIG. 20 and later ones, nodes connected in a ring are displayed in a row.

Furthermore, in FIG. 20 and later ones, four traffic states are distinguished from each other. Specifically, a thin arrow indicates "a flow of service traffic," a thick arrow indicates "a flow of part-time traffic in normal state," a double arrow indicates "a flow of part-time traffic after the completion of reestablishment," and a dotted-line arrow indicates "part-time traffic pre-empted to salvage service traffic."

As for part-time traffic, the concept of dual-homing path can be applied using the rules explained by reference to FIGS. 4 to 6. In the second embodiment, a method of reestablishing part-time traffic transmitted via a dual-homing path will be explained. Since such technical terms as part-time traffic, reestablish, and others have been described in, for example, ITU-T recommendation G. 841 (07/95), a detailed explanation will be omitted.

In FIG. 20, when attention is paid to part-time traffic (thick lines), node A is a (Δ) node, node B is a (○) node, and node C is a (□) node. Concerning another dual-homing path, node C is a (□) node, node D is a (Δ) node in both directions, node E is a (⊚) node, and node F is a (□) node. On the other hand, when attention is paid to service traffic (thin lines), point-to-point paths passing through the ring network in opposite directions are set between node B and node D.

In the second embodiment, the following rules are applied in reestablishing part-time traffic transmitted via a dual-homing path.

### (Rule 4)

### [Rule 4-1]

When there is a vacant slot in the protection line PL to which service traffic has been restored and when bidirectional transmission between the head node and the tail node is established, the part-time traffic transmitted via a dual-homing path is reestablished.

### [Rule 4-2]

In a case where a drop & continue with add node exists, when there is a vacant slot in the protection line PL to which service traffic has been restored and when bidirectional transmission between the head node and the drop & continue with add node is established, the part-time traffic transmitted via a dual-homing path is reestablished.

### (Rule 5)

When the head node sends part-time traffic to the protection lines PL in both directions, rule 4 is applied independently to the part-time traffic from the head node to the tail node on the protection line PL in each direction.

### (Case 12)

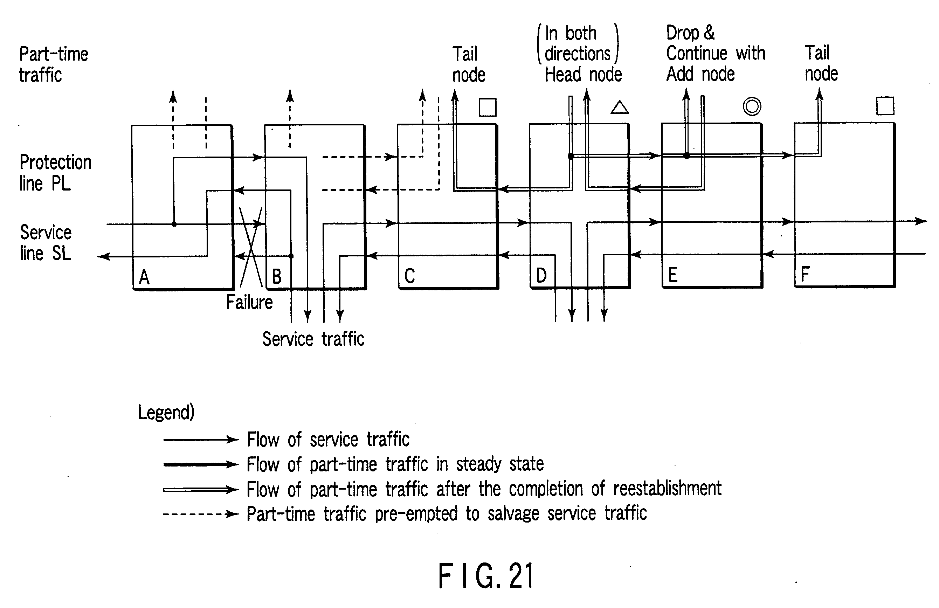

Suppose a failure has occurred in the service line SL between node A and node B in the state of FIG. 20. In this case, as shown in FIG. 21, span switching is done in the segment between node A and node B. As a result, the part-time traffic in the protection line PL in this segment is pre-empted. Accordingly, the part-time traffic going as far as node C is naturally pre-empted.

Next, the service traffic in the service line SL in this segment is switched to the protection line PL which becomes vacant. As a result of this, the service traffic is salvaged.

At this time, the dual-homing path related to the part-time traffic set between node C to node F is not affected by the failure. Thus, the state remains unchanged during the time from when the failure occurred until the restoration of the part-time traffic has been completed. In addition, the type of each of node C to node F also remains unchanged.

The route to reestablish bidirectional transmission of the pre-empted part-time traffic has been occupied by the detoured service traffic. For this reason, the part-time traffic is not reestablished for the dual-homing path extended between node A to node C.

In this case, rule 4-1 has been applied.

### (Case 13, Case 14, and Case 15)

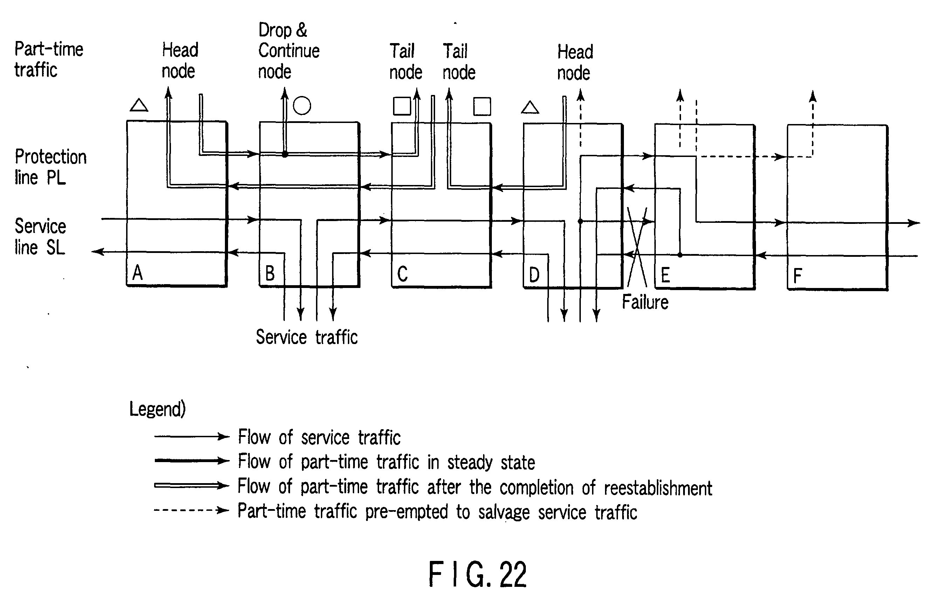

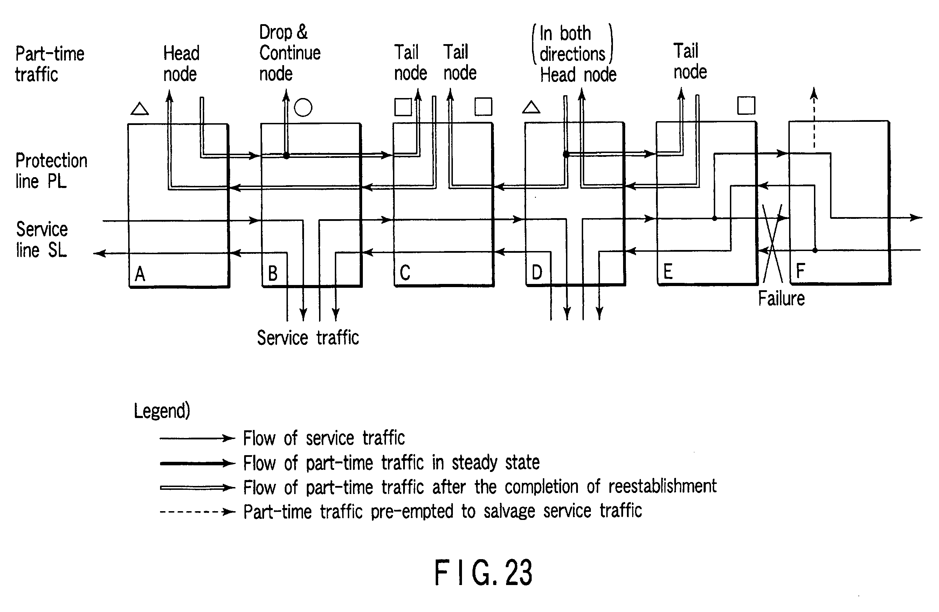

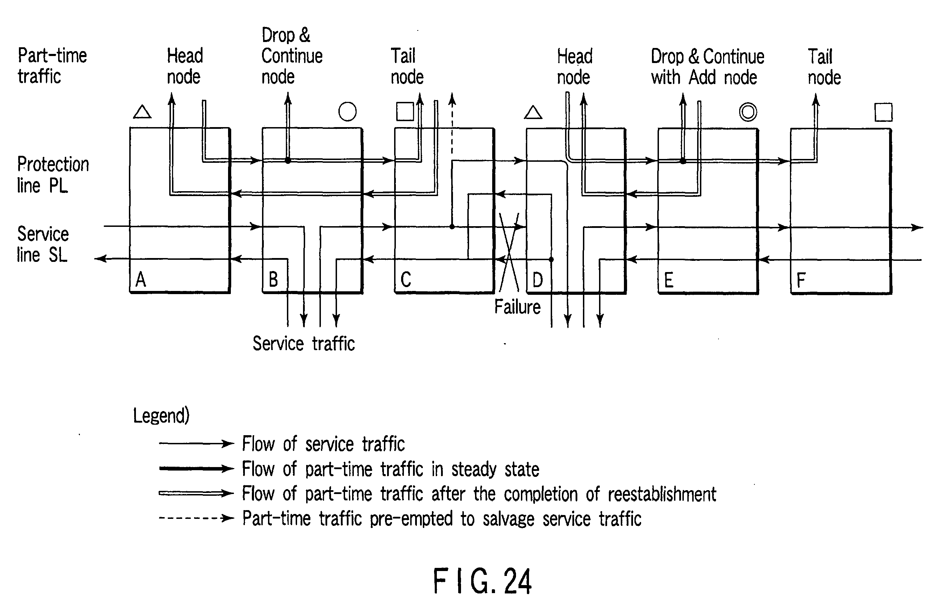

Next, let cases where a failure has occurred in the service line SL in each of the segments between node D and node E, between node E and node F, and between node C and node D be case 13, case 14, and case 15, respectively. States where the reestablishment of the part-time traffic has been completed in the individual cases are shown in FIG. 22, FIG. 23, and FIG. 24, respectively.

In these cases, too, span switching is effected between the nodes facing each other, with the fault segment between them, with the result that the service traffic is salvaged as in case 12. Although the part-time traffic in the fault segment is pre-empted, the state of the part-time traffic in the other segments remains unchanged.

The part-time traffic transmitted via the dual-homing path set between node A and node C is not reestablished for the same reason as in case 12.

In case 13, rule 4-2 and rule 5 have been applied. In case 14, rule 4 (that is, rule 4-1 and rule 4-2) has been applied. In case 15, rule 5 has been applied.

### (Case 16)

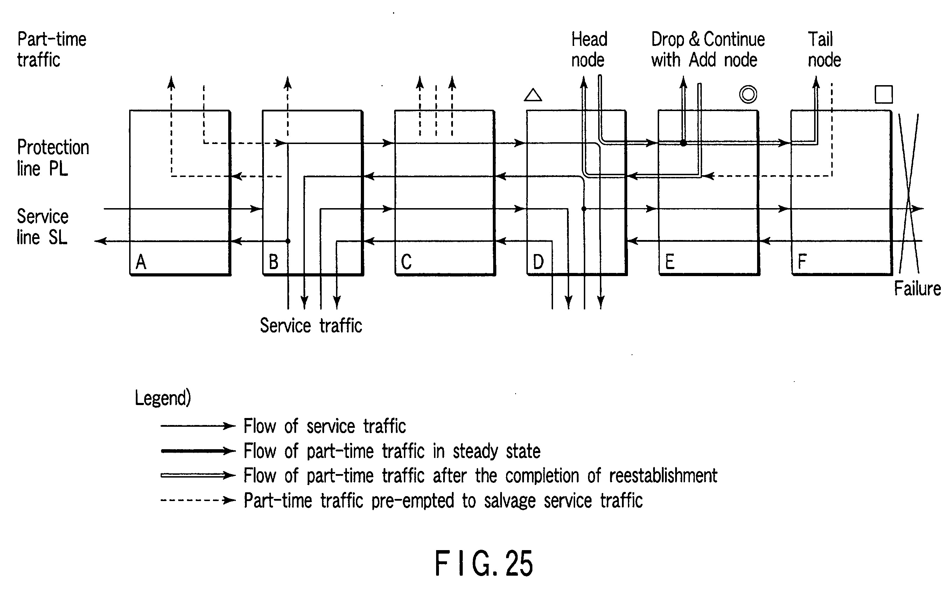

In this case, the occurrence of a ring failure between node A and node F in the state of FIG. 20 will be explained. In such a case, ring switching related to all of node A to node F in the network is effected as shown in FIG. 25.

When ring switching is done, all the part-time traffic is pre-empted from the protection line PL. Then, as described in the first embodiment, the service traffic is detoured to the protection line PL. Then, when there is a vacant slot in the protection line PL, the part-time traffic is reestablished.

In this case, rule 4-1 and rule 5 have been applied.

### (Case 17)

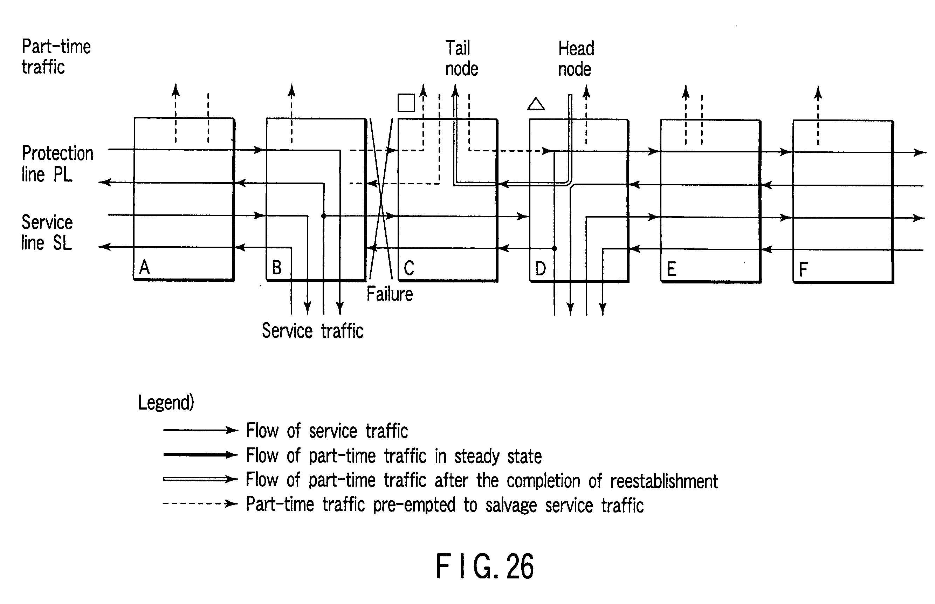

Next, a case where a ring failure has occurred in the segment between node B and node C in the state of FIG. 20 will be explained. In this case, too, as shown in FIG. 26, all the part-time traffic is first pre-empted from the protection line PL. Then, the process of detouring the service traffic is carried out and thereafter the part-time traffic is reestablished only for a vacant slot in the protection line PL.

In this case, rule 4-2 and rule 5 have been applied.

As described above, in this embodiment, only when bidirectional transmission is established for the path on the remaining protection line PL after the service traffic has been detoured to the protection line PL as a result of a failure, the part-time traffic transmitted via a dual-homing path is reestablished. As a result of this, there is no possibility that the part-time traffic transmitted via the dual-homing path will be misconnected.

The connection control messages exchanged between nodes in reestablishing part-time traffic disclosed in, for example, Japanese Patent Application No. 10-308713 (PART-TIME TRAFFIC CONNECTION CONTROL METHOD AND RING NODE) can be used as they are. The specification of the application has disclosed that four pieces of information about the type of switching, the switching node ID of the sender, the switching node ID of the receiver, and the message route are included in a part-time traffic reestablishing request message. Furthermore, the specification has disclosed that the part-time traffic reestablishing request message is exchanged via DCC (Data Communication Channel).

In the above embodiment, a system conforming to SDH has been explained. However, the present invention is not limited to SDH and may be applied to, for example, SONET (Synchronous Optical Network), a standard in the U.S.

### Industrial Applicability

As described in detail, with the present invention, it is possible to provide a traffic switching method which eliminates a possibility that any dual-homing path will be misconnected.

Therefore, the present invention is effective in technical fields related to networks complying with SDH/SONET. Since this invention particularly proposes a switching method with no loopback, it is best suited for a system where the distance between nodes is very long. Accordingly, the present invention is particularly effective in technical fields related to optical submarine cable systems.

## Claims

1. A method applied to a ring network system comprising nodes (A-F) connected in a ring shape via a service line (SL) and a protection line (PL), the method **characterized by** comprising:
when a dual-homing path which is formed with a multi-drop type outgoing path and a returning path of the direction which returns to the starting point of the outgoing path exists in the system,
presuming a node which serves as the starting point of the outgoing path, and serves as a terminal point of the returning path to be a head node, a node which corresponds to a branch node for the outgoing path and corresponds to an intermediate node for the returning path to be a drop & continue node, a node which corresponds to a branch node for the outgoing path and corresponds to a starting point node for the returning path to be a drop & continue with add node, a node which is an end node for the outgoing path to be a tail node, and a node which is an intermediate node for both of the outgoing path and the returning path to be a pass-through node, and
when a failure occurs in a part of the segment of said service line where a multi-drop path to be dropped at a plurality of nodes has been set, detouring the setting route of said multi-drop path via said protection line in such a manner that the route avoids the segment where the failure has occurred, by
changing the type of the nodes to any one of the head node, the drop & continue node, the drop & continue with add node, the tail node and the pass-through node according to the place where the failure has occurred, wherein
each node acquires information at least about the place where a failure occurred and the way the failure took place, and referring to the information acquired, the ring map, and fabric data, each node calculates a detour route of the path to salvage the service traffic; then to realize the calculated route, each node determines its switching state and changes its type of node accordingly.

2. A method applied to a ring network system according to claim 1 comprising reestablishing part-time traffic transmitted via a path set on a protection line by,
in a case where a failure has occurred in the segment of said protection line where a multi-drop path to be dropped at a plurality of nodes has been set, when a vacant resource appears in said protection line after the process of salvaging the service traffic from the failure, resetting said multi-drop path in said vacant resource.

3. The method according to claim 2, further comprising:
when bidirectional transmission is possible between a head type node and a drop & continue with add node or between a head node and a tail node, reestablishing the part-time traffic which flows though the dual homing path.

4. The method according to claim 3, wherein:
when the outgoing path is bidirectionally sent out from the head node, the reestablishing is applied to the dual-homing path set up in each direction independently.

## Patentansprüche

1. Auf ein Ringnetzwerksystem angewendetes Verfahren, das Knoten (A bis F) umfasst, die in einer Ringform über eine Dienstleitung (SL) und eine Schutzleitung (PL) verbunden sind, wobei das Verfahren **dadurch gekennzeichnet ist, dass** es umfasst:
wenn ein Zweifach-Heimkehrpfad, der mit einem ausgehenden Pfad vom Mehrabwurftyp und einem rückführenden Pfad der Richtung, die zum Startpunkt des ausgehenden Pfads zurückkehrt, ausgebildet ist, im System existiert,
Annehmen, dass ein Knoten, der als der Startpunkt des ausgehenden Pfades dient, und als ein Endpunkt des rückführenden Pfads dient, ein Kopfknoten ist, ein Knoten, der einem Zweigknoten für den ausgehenden Pfad entspricht und einem Zwischenknoten für den rückführenden Pfad entspricht, ein Abwurf- und Fortsetzknoten ist, ein Knoten, der einem Zweigknoten für den ausgehenden Pfad entspricht und einem Startpunktknoten für den rückführenden Pfad entspricht, ein Abwurf- und Fortsetz-mit-Additionsknoten ist, ein Knoten, der ein Endknoten für den ausgehenden Pfad ist, ein Schwanzknoten ist, und ein Knoten, der ein Zwischenknoten sowohl für den ausgehenden Pfad als auch für den rückführenden Pfad ist, ein Durchleitknoten ist, und,
wenn ein Fehler in einem Teil des Segmentes der Dienstleitung auftritt, wo ein abzuwerfender Mehrabwurfpfad an einer Mehrzahl von Knoten eingestellt worden ist, Umleiten der Einstellroute des Mehrabwurfpfads über die Schutzleitung in einer solchen Weise, dass die Route das Segment vermeidet, wo der Fehler aufgetreten ist, durch
Ändern des Typs der Knoten zu irgendeinem vom Kopfknoten, dem Abwurf- und Fortsetzknoten, dem Abwurf- und Fortsetz-mit-Additionsknoten, dem Schwanzknoten und dem Durchleitknoten anhand des Orts, wo der Fehler aufgetreten ist, wobei
jeder Knoten Informationen zumindest zu einem Ort, wo ein Fehler aufgetreten ist, und die Weise, in der der Fehler stattfand, ermittelt, und Bezug nehmend auf die ermittelte Information, die Ringkarte und Gewebedaten, jeder Knoten eine Umleitungsroute des Pfades berechnet, um den Diensteverkehr zu retten; und dann, zum Realisieren der berechneten Route, jeder Knoten seinen Umschaltzustand bestimmt und seinen Knotentyp entsprechend ändert.

2. Auf Ringnetzwerksystem angewendetes Verfahren gemäß Anspruch 1, umfassend das Wiederherstellen von Teilzeitverkehr, der über einen auf einer Schutzleitung eingestellten Pfad gesetzt wird, durch
in einem Fall, bei dem ein Fehler im Segment der Schutzleitung aufgetreten ist, wo ein abzuwerfender Mehrabwurfpfad an einer Mehrzahl von Knoten eingestellt worden ist, wenn eine vakante Ressource in der Schutzleitung nach dem Prozess des Bewahren des Diensteverkehrs vor dem Fehler erscheint, Rücksetzen des Mehrabwurfpfads in der vakanten Ressource.

3. Verfahren gemäß Anspruch 2, weiter umfassend:
wenn eine bidirektionale Übertragung zwischen einem Kopftypknoten und einem Abwurf- und Fortsetz-mit-Additionsknoten oder zwischen einem Kopfknoten und einem Schwanzknoten möglich ist, Re-Etablieren des Teilzeitverkehrs mit Flüssen über den Zweifach-Heimkehrpfad.

4. Verfahren gemäß Anspruch 3, wobei:
wenn der ausgehende Pfad bidirektional vom Kopfknoten aus gesendet wird, das Re-Etablieren auf den Zweifach-Heimkehrpfad angewendet wird, der in jeder Richtung unabhängig eingestellt ist.

## Revendications

1. Procédé appliqué à un système de réseau en anneau comprenant des noeuds (A-F) connectés dans une forme d'anneau via une ligne de service (SL) et une ligne de protection (PL), le procédé **caractérisé en ce qu'**il comprend :
lorsqu'un trajet de connexion à double anneau qui est formé avec un trajet sortant de type multipoint et un trajet de retour dont la direction retourne au point de départ du trajet sortant existe dans le système,
présumer un noeud qui sert de point de départ du trajet sortant, et sert de point terminal du trajet de retour pour être un noeud de tête, un noeud qui correspond à un noeud de branche pour le trajet sortant et correspond à un noeud intermédiaire pour que le trajet de retour soit un noeud abandonner et continuer, un noeud qui correspond à un noeud de branche pour le trajet sortant et correspond à un noeud de point de départ pour que le trajet de retour soit un noeud abandonner et continuer avec ajout, un noeud qui est un noeud de fin pour que le trajet sortant soit un noeud de queue, et un noeud qui est un noeud intermédiaire à la fois pour que le trajet sortant et le trajet de retour soient un noeud de traversée, et
lorsqu'une défaillance se produit dans une partie du segment de ladite ligne de service où un trajet multipoint devant être abandonné au niveau d'une pluralité de noeuds a été défini, dévier la route de définition dudit trajet multipoint via ladite ligne de protection de telle sorte que la route évite le segment où la défaillance s'est produite, en
changeant le type des noeuds pour l'un quelconque parmi le noeud de tête, le noeud abandonner et continuer, le noeud abandonner et continuer avec ajout, le noeud de queue et le noeud de traversée selon l'endroit où la défaillance s'est produite, où
chaque noeud acquiert des informations concernant au moins l'endroit où une défaillance s'est produite et la façon dont la défaillance a eu lieu, et en faisant référence aux informations acquises, à la carte d'anneau, et à des données de matrice, chaque noeud calcule une route de déviation du trajet pour sauver le trafic de service ; ensuite pour réaliser la route calculée, chaque noeud détermine son état de commutation et change son type de noeud en conséquence.

2. Procédé appliqué à un système de réseau en anneau selon la revendication 1, comprenant le rétablissement d'un trafic à temps partiel transmis via un trajet défini sur une ligne de protection en,
dans un cas où une défaillance s'est produite dans le segment de ladite ligne de protection où un trajet multipoint devant être abandonné au niveau d'une pluralité de noeuds a été défini, lorsqu'une ressource vacante apparaît dans ladite ligne de protection après le processus consistant à sauver le trafic de service de la défaillance, redéfinissant ledit trajet multipoint dans ladite ressource vacante.

3. Procédé selon la revendication 2, comprenant en outre :
lorsqu'une transmission bidirectionnelle est possible entre un noeud de type tête et un noeud abandonner et continuer avec ajout ou entre un noeud de tête et un noeud de queue, le rétablissement du trafic à temps partiel qui s'écoule à travers le trajet de connexion à double anneau.

4. Procédé selon la revendication 3, dans lequel :
lorsque le trajet sortant est envoyé bidirectionnellement depuis le noeud de tête, le rétablissement est appliqué au trajet de connexion à double anneau établi dans chaque direction indépendamment.
